(19) Europäisches Patentamt
European Patent Office
Office européen des brevets

(11) **EP 2 298 708 A1**

(12) **EUROPÄISCHE PATENTANMELDUNG**

(43) Veröffentlichungstag:
**23.03.2011 Patentblatt 2011/12**

(51) Int Cl.:
*C04B 2/12* *(2006.01)*        *F27B 1/20* *(2006.01)*
*F27D 3/10* *(2006.01)*        *F27B 1/00* *(2006.01)*

(21) Anmeldenummer: **09011690.6**

(22) Anmeldetag: **11.09.2009**

| | |
|---|---|
| (84) Benannte Vertragsstaaten:<br>**AT BE BG CH CY CZ DE DK EE ES FI FR GB GR HR HU IE IS IT LI LT LU LV MC MK MT NL NO PL PT RO SE SI SK SM TR**<br>Benannte Erstreckungsstaaten:<br>**AL BA RS** | (71) Anmelder: **Blue red srl**<br>**39012 Meran (IT)**<br><br>(72) Erfinder: **Die Erfindernennung liegt noch nicht vor**<br><br>(74) Vertreter: **Kador & Partner**<br>**Corneliusstrasse 15**<br>**80469 München (DE)** |

(54) **Verfahren und Vorrichtung zur Beschickung eines Schachtofens und ein Schachtofen enthaltend die Vorrichtung**

(57)     Die vorliegende Erfindung betrifft ein Verfahren zur Beschickung eines Schachtofens mit Schüttgut unterschiedlicher Stückgröße, dadurch gekennzeichnet, dass das Schüttgut an unterschiedlichen Positionen bezüglich des horizontalen Querschnitts des Innenraum des Schachtofens zugeführt wird, um eine gleichmäßige Verteilung des Schüttguts bezüglich des Querschnitts des Schachtofeninnenraums zu erhalten, eine Vorrichtung zur Durchführung dieses Verfahrens, einen Schachtofen enthaltend die erfindungsgemäße Vorrichtung und die Verwendung dieses Schachtofens für Kalzinierungsreaktionen. Vorzugsweise enthält die Vorrichtung ein Förderband zur Zuführung von Schüttgut in den Schachtofen und eine Vorrichtung zum Verschieben des Förderbandes.

FIG 2

EP 2 298 708 A1

## Beschreibung

Die vorliegende Erfindung betrifft ein Verfahren und eine Vorrichtung zur Beschickung eines Schachtofens mit Schüttgut unterschiedlicher Stückgröße (wie z.B. Kalk- und Dolomitgestein), einen Schachtofen enthaltend die erfindungsgemäße Vorrichtung und die Verwendung des erfindungsgemäßen Schachtofens.

Die traditionellen Geräte zur Beförderung des erwähnten Schüttguts in das Innere der sogenannten "Schachtöfen" werden in Abhängigkeit von der Beschaffung der Lade-Brennkammer dieser Öfen entwickelt, welche zum Beispiel vertikal und rechteckigen Querschnitts sein kann.

Zum Beispiel erhält man Calciumoxid CaO aus dem Brennen von Kalkstein-Bruchstücken unterschiedlicher Größe in entsprechenden Öfen, in deren Inneren Kalk- und/oder Dolomitgestein Hitze ausgesetzt wird, die eine chemische Reaktion auslöst (Kalzinierungsreaktion), welche Calciumcarbonats $CaCO_3$ in Kohlendioxid $CO_2$ und Calciumoxid CaO umwandelt.

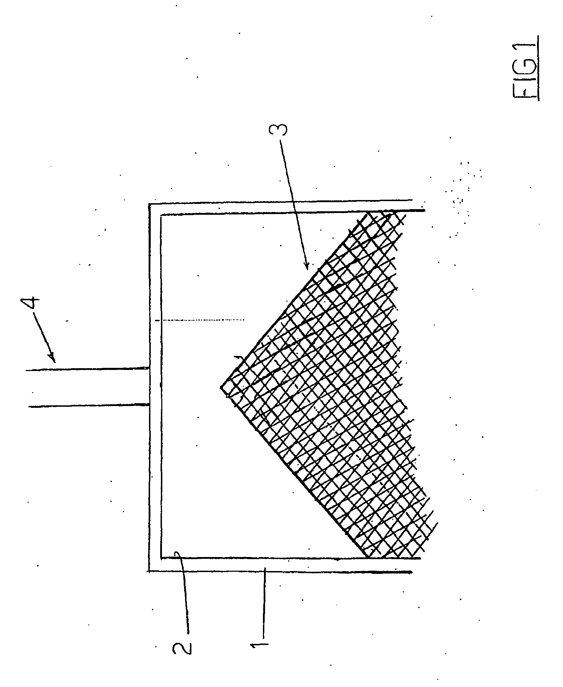

Abbildung 1 (FIG 1) zeigt schematisch eine Teil-Seitenansicht eines solchen konventionellen, vertikalen Schachtofens: Mit (1) ist die Lade-Brennkammer (auch "Schacht" genannt) des Ofens (2) bezeichnet; des dort angehäuften Schüttguts unterschiedlicher Stückgröße sind mit (3) gekennzeichnet; die (4) schließlich bezeichnet das Rohr zur Beschickung der Lade-Brennkammer mit dem Schüttgut (3). Das Schüttgut(3) werden also von oben herangeführt und in den zentralen Bereich der Kammer (2) fallen gelassen: In Folge neigen die Stücke des Schüttguts (3) größeren Ausmaßes aufgrund ihres erhöhten Gewichts dazu, in Richtung Kammerperipherie fortzurollen; dies bewirkt eine Entmischung der Ladung, also eine nicht gleichmäßige Größenverteilung des Schüttguts, so dass schließlich porösere Bereiche in der Nähe der Schachtwände (gröberes Schüttgut, große Zwischenräume zwischen den Bruchstücken) sowie weniger poröse Bereiche im Zentrum (feineres Schüttgut, kleinere Zwischenräume) entstehen. Dieses Ladeverfahren bringt eine Reihe von Nachteilen mit sich, die z.B. im Bereich der Kalkproduktion ein besonders unerwünschtes und bisher ungelöstes Problem darstellen: Die Inhomogenität der Ladung des Schüttgut (3) im Schachtinneren hat eine dementsprechende thermische Inhomogenität zur Folge, da die, zum Beispiel von oben, eingeblasenen warmen Gas- sowie Brennluftströmungen den Weg des geringsten Widerstands, d. h. dem Grad der Porosität der Ladung folgen. Anschließend bilden sich die Endprodukte (z.B. der Kalzinierungsreaktion), die sich an den Stellen, an denen höhere Hitze vorherrscht (sog. Überbrennen) zu Klumpen zusammenpacken, was im Falle einer Kalzinierungsreaktion eine geringere Reaktionsbereitschaft mit Wasser zur Folge hat. Direkte Konsequenz dieses Phänomens ist die mögliche Entstehung von zu stark gebrannten Endprodukten (z.B. Kalkblöcken) an bestimmten Stellen, welche Anomalien beim Ofen-Betrieb und im schlimmsten Fall den Stillstand der gesamten Kalkproduktionsanlage verursachen können, was beachtliche wirtschaftliche Schäden zur Folge hat.

Daher ist es ein Ziel der vorliegenden Erfindung, eine neu konzipierte Vorrichtung und Verfahren zur Beschickung eines Schachtofens mit Schüttgut unterschiedlicher Stückgröße (wie z.B. Kalk- und Dolomitgestein), das die Bildung von zu stark gebrannten Blöcken in den Endprodukten zu verhindern oder zumindest deutlich zu reduzieren und somit die Nachteile der oben geschilderten traditionallen Verfahren zu beseitigen.

Die vorliegende Erfindung hat weiterhin zum Ziel, eine Vorrichtung und Verfahren zur Verfügung zu stellen, dass zuverlässig, zweckmäßig und sicher ist, sowie zufriedenstellende Produktionsstandards ermöglicht.

Ebenfalls Ziel der Erfindung ist es, ein Verfahren, eine Vorrichtung und einen Schachtofen enthaltend die Vorrichtung anzubieten, dessen Kosten sich in Bezug auf die angestrebten Vorteile in Grenzen halten. Ferner hat die vorliegende Erfindung zum Ziel, eine neu konzipierte Methode für die Ladung von Schüttgut unterschiedlicher Stückgröße (wie Kalk- und Dolomitgestein) in das Innere eines Schachtofens anzubieten, welche sich aus einer bestimmten Anzahl von Betriebsphasen zusammensetzt und die Nachteile der bekannten Verfahrensweisen löst. Ebenfalls Ziel der Erfindung ist es, ein Verfahren anzubieten, mit der zufriedenstellende Produktionsstandards erreicht werden können und deren Betriebskosten sich in Bezug auf die angestrebten Vorteile in Grenzen halten.

In der vorliegenden Erfindung bedeutet Größe des Schüttguts die Größe der einzelnen im Schüttgut befindlichen Stücke.

Unterschiedliche Größe des Schüttguts bedeutet, dass die einzelnen Stücke innerhalb des Schüttgutes unterschiedliche Größe aufweisen.

Die genannten Ziele werden mithilfe einer Vorrichtung und Verfahrens zur Ladung von Schüttgut unterschiedlicher Stückgröße (wie z.B. Kalk- und Dolomitgestein) in das Innere eines Schachtofens erreicht.

Daher stellt die vorliegende Erfindung ein Verfahren zur Beschickung eines Schachtofens mit Schüttgut unterschiedlicher Stückgröße zur Verfügung, welches dadurch gekennzeichnet ist, dass das Schüttgut an unterschiedlichen Positionen bezüglich des horizontalen Querschnitts des Innenraums des Schachtofens zugeführt wird, um eine gleichmäßige Verteilung des Schüttguts bezüglich des Querschnitts des Schachtofeninnenraums zu erhalten.

Mit dem erfindungsgemäßen Verfahren wird eine homogenere Größenverteilung des Schüttguts erreicht was einen homogeneren Gasfluss im Schachtofen und somit eine homogenere Wärmeverteilung zur Folge hat.

Vorzugsweise ist der Schachtofen im erfindungsgemäßen Verfahren ein vertikaler Schachtofen.

Vorzugsweise erfolgt die Zufuhr des Schüttguts an die unterschiedlichen Positionen zeitlich versetzt.

Der Schachtofen im erfindungsgemäßen Verfahren weist vorzugsweise einen rechteckigen horizontalen Querschnitt auf.

Vorzugsweise erfolgt die Zufuhr des Schüttguts mittels eines Förderbandes.

Das Förderband wird vorzugsweise zwischen einer Ruheposition (A) über eine mittlere Betriebsposition (C) in eine finale Betriebsposition (B) verschoben, wobei

in der Ruheposition (A) sich das Förderband (11) von oben gesehen vollständig außerhalb des horizontalen Querschnitts des Schachtofens befindet;

sich in der mittleren Betriebsposition (C) ein Teil des Förderbandes (11) von oben gesehen innerhalb des horizontalen Querschnitts des Schachtofeninnenraums befindet, aber das Förderband (11) die vertikale Zentralachse (H) des Schachtofens nicht schneidet; und

sich in der finalen Betriebsposition (B) das Förderband von oben gesehen innerhalb des horizontalen Querschnitts des Schachtinnenraums befindet und die vertikale Zentralachse (H) des Schachtofens schneidet.

Das Förderband wird bevorzugt horizontal verschoben.

Die Zufuhr an die unterschiedlichen Positionen erfolgt vorzugsweise während das Förderband zwischen der mittleren Betriebsposition (C) und der finalen Betriebsposition (B) verschoben wird.

Vorzugsweise ist im erfindungsgemäßen Verfahren die folgende Relation erfüllt:

$$\frac{N}{2} \le P$$

wobei

N der Abstand zwischen der Zentralachse (H) des Schachtofens und der Stelle ist, an der das Förderband beim Verschieben von der Ruheposition (A) in die finale Betriebsposition (B) den horizontalen Querschnitt des Schachtofeninnenraumss, von oben gesehen, erstmals kreuzt; und

P der Abstand zwischen der mittleren Betriebsposition (C) und der finalen Betriebsposition (B) ist,

stärker bevorzugt ist im erfindungsgemäßen Verfahren die folgende Relation erfüllt:

$$\frac{4N}{3} \le P$$

wobei N, P dieselbe Bedeutung wie zuvor definiert haben und am stärksten bevorzugt ist im erfindungsgemäßen Verfahren die folgende Relation erfüllt:

$$N \le P$$

wobei N, P dieselbe Bedeutung wie zuvor definiert haben.

Vorzugsweise enthält der Schachtofen im oberen Teil eine Zuführung enthält durch die das Schüttgut mittels des Förderbands dem Schachtofens zugeführt wird.

Vorzugsweise ist beim Öffnen der Zuführung (8) das Förderband bereits in Betrieb.

Vorzugsweise erfolgt das Öffnen und Verschließen der Zuführung, die Verschiebung des Förderbands von der Ruheposition (A) in die finale Betriebsposition (B) und das Anschalten des Förderbandes so, dass die Zeit in der die Zuführung geöffnet ist, so gering wie möglich ist.

Dies wird im folgenden auch "Phasenbeziehung" oder "optimale Phasenbeziehung" genannt.

So wird zum Beispiel vorzugsweise die Zuführung erst kurz bevor das Förderband bei der Verschiebung aus der Ruheposition (A) die Zuführung des Schachtofens erreicht geöffnet und/oder das Förderband bereits eingeschaltet bevor beim Verschieben des Förderbandes aus der Ruheposition (A) die Zuführung erreicht wird, so dass beim Erreichen des Querschnitts des Schachtofens durch Verschieben des Förderbands bereits Teile des Stückgutes von dem Förderband in den Schachtofen befördert werden.

Es wird also vorzugsweise nicht schrittweise zuerst die Zuführung geöffnet, dann das Förderband aus der Ruheposition (A) so verschoben, dass sich ein Teil des Förderbandes von oben gesehen innerhalb des Querschnitts des Schachtofens befindet und erst danach das Förderband selbst eingeschaltet.

Vorzugsweise erfolgt die vollständige Beschickung des Schachtofens mittels einer Hinfahrt oder einer Hin- und Rückfahrt, stärker bevorzugt mittels einer Hin- und Rückfahrt.

Zudem stellt die vorliegende Erfindung eine Vorrichtung zur Beschickung eines Schachtofens zur Verfügung enthaltend

- ein Förderband zur Zuführung von Schüttgut in den Schachtofen;

- eine Vorrichtung zum Verschieben des Förderbandes.

**dadurch gekennzeichnet, dass** das Förderband mittels der Vorrichtung zum Verschieben des Förderbandes zwischen einer Ruheposition (A) über eine mittlere Betriebsposition (C) in eine finalen Betriebsposition (B) verschoben werden kann, wobei

in der Ruheposition (A) sich das Förderband von oben gesehen vollständig außerhalb des Querschnitts des Schachtofens befindet;

in der mittleren Betriebsposition (C) sich ein Teil des Förderbandes von oben gesehen innerhalb des Querschnitts des Schachtofens befindet, aber das Förderband die vertikale Zentralachse (H) des Schachtofens nicht schneidet;

und

in der finalen Betriebsposition (B) das Förderband die vertikale Zentralachse (H) des Schachtofens schneidet.

Vorzugsweise verschiebt die Vorrichtung zum Verschieben des Förderbandes das Förderband mittels eines Stellmotors und einer Zahnstange.

Die Vorrichtung zum Verschieben des Förderbandes verschiebt das Förderband vorzugsweise horizontal.

Vorzugsweise ist der Schachtofen ein vertikaler Schachtofen.

Der Schachtofen weist vorzugsweise einen rechteckigen Querschnitt auf.

Die vorliegende Erfindung betrifft weiterhin einen Schachtofen der die erfindungsgemäße Vorrichtung zur Beschickung eines Schachtofens enthält.

Vorzugsweise ist der Schachtofen ein vertikaler Schachtofen.

Der Schachtofen hat vorzugsweise einen rechteckigen Querschnitt.

Die vorliegende Erfindung betrifft weiterhin die Verwendung des erfindungsgemäßen Schachtofens für Kalzinierungsreaktionen.

Die erfindungsgemäße Vorrichtung zeichnet sich dadurch aus, dass sich im oberen Teil der Schachtwand des genannten Schachtofens eine Zuführung befindet, an der eine bewegliche Abdeckung zum Öffnen und Verschließen der Zuführung angebracht ist, um die sich im Schachtinneren befindliche Ladekammer von außen zugänglich zu machen; ein Förderband wird mit einem ersten Stellmotor, bevorzugt mit Getriebe, versehen, welcher die Position des Förderbandes verändern kann, und zwar zwischen einer Ruheposition (A) und einer finalen Betriebsposition (B), auf deren Höhe das Förderband die vertikale Zentralachse (H) des genannten Schachts kreuzt: und es wird mit einem zweiten Motor versehen, der das genannte Band antreibt, um die Schüttgutstücke unterschiedlicher Stückgröße in Bewegungsrichtung (W) zu befördern. Zuvor wird das Schüttgut von einer Einspeisevorrichtung auf der Oberseite des entsprechenden aktiven Teils des Förderbands abgesetzt. Das Absetzen des Schüttguts unterschiedlicher Stückgröße auf der Oberseite des aktiven Bandteils, der Antrieb des genannten ersten und zweiten Motors sowie das Öffnen und Verschließen der Abdeckung der genannten Zuführung geschehen in gegenseitiger Phasenbeziehung, so dass ein gleichmäßiges Absetzen des Schüttguts unterschiedlicher Stückgröße im Inneren der Schacht-Ladekammer erreicht wird.

Im Folgenden bezeichnet der Begriff "mittlere Betriebsposition (C)" die Position des Förderbandes in der sich ein Teil des Förderbandes (11) von oben gesehen innerhalb des Querschnitts des Schachtofens befindet, aber das Förderband (11) die vertikale Zentralachse (H) des Schachtofens nicht schneidet

Bevorzugt verschließt die bewegliche Abdeckung zum Öffnen und Verschließen der Zuführung die Zuführung gasdicht.

Im Verfahren der vorliegende Erfindung ist im oberen Teil der Schachtwand des genannten, vorzugsweise vertikalen, Schachtofens eine Zuführung vorzusehen, welche die sich im Schachtinneren befindliche Ladekammer von außen zugänglich macht und an welche ein eine bewegliche Abdeckung zum Öffnen und Verschließen der Zuführung angebracht ist . Das Verfahren zeichnet sich durch folgende Betriebsphasen aus: Das Öffnen der Zuführung, um die Ladekammer von außen zugänglich zu machen; das Absetzen des Schüttgut unterschiedlicher Stückgröße an unterschiedlichen Positionen im Inneren der Ladekammer erfolgt vorzugsweise mittels variabler Beschickung parallel zu einer Seite des rechteckigen Querschnitts zur gleichmäßigen Verteilung des Schüttguts im Innern eben dieser Ladekammer; das Verschließen der Zuführung. Insbesondere das Öffnen der Zuführung hat in Phasenbeziehung mit der Bewegung des Förderbands von einer Ruheposition in Richtung einer finalen Betriebsposition, auf deren Höhe das Förderband die vertikale Zentralachse des genannten Schachts kreuzt, zu geschehen. Außerdem umfasst die Phase des Absetzens des genannten Schüttguts unterschiedlicher Stückgröße im Inneren der Ladekammer mehrere Betriebsphasen, die untereinander in geeigneter Phasenbeziehung stehen und Folgendes umfassen: Die Bewegung des genannten Förderbands zwischen der finalen Betriebsposition (B) und einer mittleren Betriebsposition (C), welche sich zwischen der finalen Betriebsposition (B) und der Ruheposition (A) befindet; der Antrieb des Förderbands in Bewegungsrichtung; das kontrollierte Absetzen des Schüttguts unterschiedlicher Stückgröße auf das aktive Bandteil durch eine Einspeisevorrichtung.

Die Merkmale der Erfindung werden im Folgenden in Übereinstimmung mit den Patentansprüchen sowie mit Hilfe der angefügten Zeichenblätter genauer erläutert:

- Abbildung 1 (FIG 1) zeigt schematisch eine Teil-Seitenansicht eines traditionellen vertikalen Schachtofens;

- Abbildung 2 (FIG 2) zeigt schematisch eine Teil-Seitenansicht der Ladevorrichtung, die Gegenstand der vorliegenden Erfindung ist. Abgebildet ist die Breitseite des Schachts eines vertikalen Schachtofens. In der Beschreibung wird eine bevorzugte Ausführungsform der Erfindung mit Bezugnahmen auf Abbildung 2 erläutert. Es werden zudem weitere beispielhafte Ausführungsformen beschrieben, diese jedoch nicht in Abbildungen gezeigt.

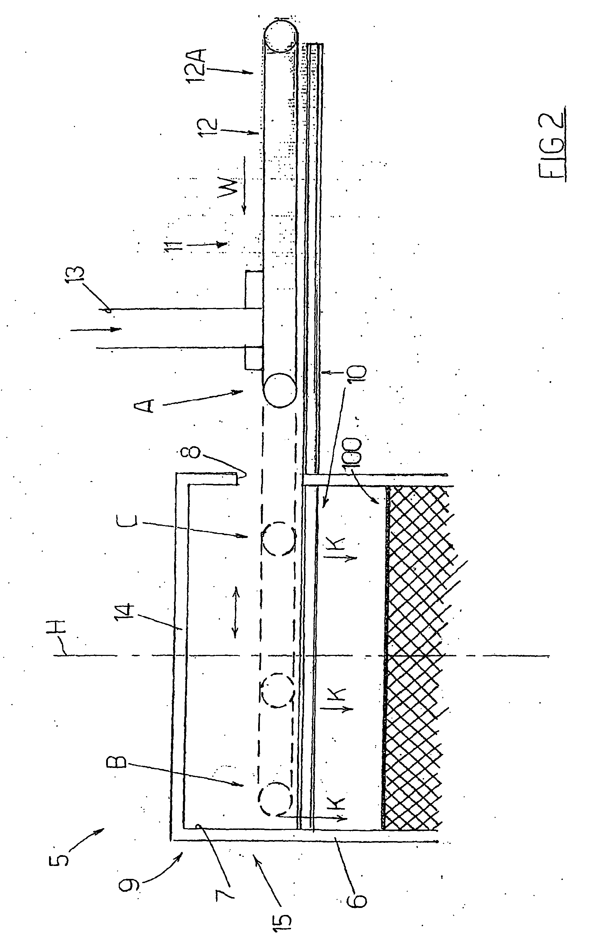

Die Ladevorrichtung, welche Gegenstand der vorliegenden Erfindung ist, wird in Bezugnahme auf die Abbildungen 2, 3 insgesamt mit der (5) bezeichnet und umfasst Folgendes: In einem vertikalen Schacht (6) rechteckigen Querschnitts eines (nicht abgebildeten) Schachtofens befindet sich eine interne Kammer (7) zur Ladung und zum Brennen des Schüttguts (100) unterschiedlicher Stückgröße (im Folgenden kurz "Ladekammer (7)"), die eine Zuführung (8) in ihrem oberen Teil (9) aufweist, zum Beispiel in Bezug auf die relative Seitenoberfläche (15), welche die Ladekammer (7) nach außen verbindet. An diese Zuführung wird eine (nicht abgebildete) Abdeckung angebracht, zum Beispiel eine mechanisch zu öffnende Klappe. Zwei horizontale und nebeneinander liegende Führungsschienen (10), die an einem (nicht abgebildeten) Stützgestell fixiert werden, befinden sich sowohl außerhalb als auch innerhalb der Ladekammer (7) und sind so konstruiert, dass das Öffnen und Verschließen der Zuführung (8) nicht behindern. Ein geschlossenes Rollenförderband (11) läuft über ein (nicht abgebildetes), auf den Führungsschienen (10) befestigtes Fahrwerk, von wo aus es die (ebenfalls nicht abgebildeten) ersten Stellmotors zwischen einer Ruheposition (A) außerhalb der Ladekammer (7) und einer finalen Betriebsposition B innerhalb der Ladekammer (7) bewegen; auf Höhe der Betriebsposition (B) kreuzt das Förderband (11) die vertikale Zentralachse (H) des Schachts (6). Eine (nicht dargestellte) Einspeisevorrichtung setzt schließlich auf kontrollierte und intermittierende Weise das Schüttgut mittels eines fixen Rohrs (13) auf den aktiven Teil (12A) des Bands (12) des Förderbands (11) ab. Das Band (12) wird von (nicht abgebildeten) zweiten Motors intermittierend in Bewegungsrichtung (W) angetrieben. Bei der in Abbildung (2) gezeigten Ausführungsform wird die Betriebsposition (B) so strukturiert, dass sich das Förderband (11) zum Beispiel parallel zur Breitseite des rechteckigen Querschnitts des Ofens (6) bewegt.

Lediglich beispielhaft und nicht etwa abschließend umfasst das Förderband eine Vielzahl von (nicht abgebildeten) Rollen, so dass der erste Stellmotor das Förderband (11) mittels einer (ebenfalls nicht abgebildeten) Zahnstange verschiebt, die an dem Komplex aus Förderband (11) und Führungsschienen (10) befestigt ist.

Das hier in Frage stehende Ladevorrichtung (5) wird so ausgeführt, dass das Rohr (13) sich stets oberhalb des aktiven Teils (12A) des Bands (12) befindet, auch dann, wenn sich das Förderband (11) in der finalen Betriebsposition (B) befindet.

Die Aktivierung der Einspeisevorrichtung zum Absetzen des Schüttguts unterschiedlicher Stückgröße auf der Oberseite des aktiven Bandteils (12A), der Antrieb des ersten und zweiten Motors sowie das Öffnen und Verschließen der Zuführung (8) geschehen vorteilhaft in gegenseitiger Phasenbeziehung, um ein gleichmäßiges Absetzen des Schüttguts im Inneren der Ladekammer (7) des Schachts (6) zu erreichen, wie es im Folgenden näher erläutert wird.

Der Betrieb des in Frage stehenden Ladevorrichtung (5) wird durch die Beschreibung der Betriebsphasen des entsprechenden Ladeverfahren des Schüttguts unterschiedlicher Stückgröße in das Innere eines vertikalen Schachtofens rechteckigen Querschnitts definiert; auch dies ist Gegenstand der vorliegenden Erfindung. Ausgehend von einer Startkonfiguration, bei der die Klappe geschlossen ist und das Förderband (11) sich in der Ruheposition (A) befindet, sind dies namentlich folgende Betriebsphasen:

- Das Öffnen der Zuführung, um die Ladekammer (7) zugänglich zu machen, sowie in Phasenbeziehung die Bewegung des Förderbands (11) von der Ruheposition (A) bis zur genannten finalen Betriebsposition (B);

Dem folgt die Phase des Absetzens des Schüttguts unterschiedlicher Stückgröße im Innern der Ladekammer (7) gemäß variabler Beschickung (K) im Inneren der Ladekammer (7) zur gleichmäßigen Verteilung des Schüttguts (100). Speziell diese Phase umfasst Betriebsphasen, die in idealer Phasenbeziehung untereinander stehen und Folgendes enthalten:

- die Bewegung des Förderbands (11) zwischen der finalen Betriebsposition (B) und einer mittleren Betriebsposition (C), welche sich funktional zwischen der finalen Betriebsposition (B) und der Ruheposition A befindet;

- den Antrieb des Bands (12) des Förderbands (11) gemäß und in Richtung der Bewegungsrichtung (W); und - das kontrollierte Absetzen des Schüttguts von der Einspeisevorrichtung auf den aktiven Teil (12A) des Bands (12);

Der Ladezyklus des Schüttguts (100) unterschiedlicher Stückgröße in der Ladekammer (7) endet schließlich damit, dass das Förderband (11) in die Ruheposition (A) befördert und die Zuführung (8) geschlossen wird.

Das Schüttguts unterschiedlicher Stückgröße werden also kontinuierlich vom Band (12) abgesetzt, während das Förderband (11) den Abschnitt zwischen der mittleren Betriebsposition (C) und der finalen Betriebsposition (B) zurücklegt. Letzteres kann folgendermaßen ablaufen: mittels einer einfachen Fahrt, wobei der Abschnitt der mittleren Betriebsposition (C) die finalen Betriebsposition (B) erreicht, oder umgekehrt; mittels einer Hin- und Rückfahrt auf demselben Bandabschnitt; oder mittels mehrerer Hin- und Rückfahrten, wenn dies die einzuspeisenden Schüttgutmengen, ihre Stückgröße und/oder andere Produktionsmerkmale erforderlich machen. Auf diese Weise wird vom Band (12) ein Fluss von Schüttgut unterschiedlicher Stückgröße abgesetzt, der eine gleichmäßige Verteilung dieses Schüttguts im Innern der Ladekammer (7) ermöglicht, so dass alle Bereiche die gleiche Porosität aufweisen. Die Verbrennungsluft, zum Beispiel eingeblasen von oben in das Innere der Ladekammer (7), wird also im Kammerzentrum und in Schachtwandnähe in gleichem Maße verteilt; daher wird die Produktion von zu stark gebrannten Kalk und die Klumpenbildung im Endprodukten bemerkenswert reduziert und man erhält im Vergleich zu den bekannten Lösungen eine bessere Kalkqualität am Ofenausgang. Außerdem bilden sich keine zu stark gebrannten Kalkblöcke, welche einen ungewünschten Stillstand des Ofens verursachen könnten.

Der Vorteil der vorliegenden Erfindung besteht also darin, eine Ladevorrichtung zur Ladung von Schüttgut unterschiedlicher Stückgröße in das Innere eines, vorzugsweise, vertikalen Schachtofens rechteckigen Querschnitts zu beschreiben, welches auf brillante Weise alle Nachteile löst, die den bekannten Lösungen im fraglichen Sektor anhaften und beklagt werden: Mit dieser neuen Ladevorrichtung weist der Kalk am Ofenausgang eine höhere Qualität auf, da die Menge der zu stark gebrannten Endprodukte (z.B. Kalkblöcke) und die Klumpenbildung im Endprodukte sehr begrenzt oder vernachlässigbar ist. Zudem ermöglicht dies außerdem einen regulären und kontinuierlichen Betrieb des Ofens, in welchem diese Ladevorrichtung integriert wird, da keine Anomalien aufgrund der Bildung von zu stark gebrannten Kalkblöcke und die Klumpenbildung nicht mehr auftreten, wie dies bei den bekannten Lösungen der Fall ist. Die erfundene Vorrichtung ist sicher, zuverlässig, zweckmäßig und ermöglicht ferner zufriedenstellende Produktionsstandards.

Ein weiterer Vorteil der vorliegenden Erfindung ist es, eine Vorrichtung beschrieben zu haben, dessen Kosten sich in Bezug auf die erhaltenen Vorteile in Grenzen halten.

Ein weiterer Vorteil der Erfindung besteht darin, ein Verfahren zur Ladung von Schüttgut unterschiedlicher Stückgröße in das Innere eines vertikalen Schachtofens rechteckigen Querschnitts beschrieben zu haben, welches - genauso wie die Vorrichtung, die es ausführt - auf brillante Weise alle Nachteile löst, die den bekannten Lösungen im fraglichen Sektor anhaften und beklagt werden: Durch die Anwendung des vorliegenden Ladeverfahren beispielsweise in der Kalkproduktion weist der Kalk am Ofenausgang sogar eine höhere Qualität auf, da die Menge der zu stark gebrannten Kalkblöcke und die Klumpenbildung im Endprodukte sehr begrenzt oder vernachlässigbar ist; dies ermöglicht außerdem einen regulären und kontinuierlichen Betrieb des Ofens, in welchem dieses Verfahren zur Anwendung kommt, insofern keine Anomalien aufgrund der Bildung von zu stark gebrannten Kalkblöcke und die Klumpenbildung nicht mehr auftreten, wie dies bei den bekannten Lösungen der Fall ist. Die erfundene Vorrichtung ist sicher, zuverlässig, zweckmäßig und ermöglicht ferner zufriedenstellende Produktionsstandards.

Ein weiterer Vorteil der vorliegenden Erfindung ist es darüber hinaus, ein Verfahren beschrieben zu haben, dessen Betriebskosten sich in Bezug auf die erhaltenen Vorteile in Grenzen halten.

Eine andere mögliche, in den Abbildungen nicht gezeigte Ausführungsform der Ladevorrichtung unterscheidet sich von der oben beschriebenen durch die Tatsache, dass die Führungsschienen (10) außerhalb der Ladekammer (7) und nicht in ihrem Inneren angebracht werden; die Ladevorrichtung (5) ist dann so konstruiert, dass das Förderband (11) freitragend ist, sobald es teilweise durch die Zuführung (8) in das Innere der Ladekammer (7) eingeführt wird, bis die finalen Betriebsposition (B) erreicht wird.

Bei einer weiteren alternativen Ausführungsform wird das Förderband (11) funktional durch einen Rüttelkanal oder einen Mitnehmer ersetzt. Dadurch bleiben alle vorteilhaften technisch-funktionalen Merkmale der vorliegenden Erfindung, die oben wiederholt genannt wurden, erhalten.

Eine weitere alternative, ebenfalls nicht abgebildete Ausführungsform unterscheidet sich von der Haupt-Ausführungsform, auf welche sich Abbildung 2 bezieht, dadurch, dass die Zuführung (8) auf der Oberseite (14) des Schachts (6) vorgesehen ist: Die Führungsschienen (10) sind in diesem Fall auf der Schachtoberseite anzubringen, so dass sich auch das Förderband (11) über dem Schacht (6) befindet.

Eine weitere alternative, nicht abgebildete Ausführungsform des hier in Frage stehenden Ladeverfahrens unterscheidet sich von jener, auf welche sich Abbildung (2) bezieht, dadurch, dass die Zuführung (8) auf der Oberseite (14) des Schachts (6) vorgesehen ist: Nach der Entfernung der Abdeckung kann das Absetzen des Schüttguts statt durch ein Förderband (11) durch jegliche beliebige Vorrichtungen oder Apparate wie etwa Rüttelkanäle oder Mitnehmer erfolgen, so dass eine gleichmäßige Verteilung des Schüttguts im Inneren der Ladekammer (7) gemäß einer variabler Beschickung (K), beispielsweise parallel zur Längsseite des rechteckigen Querschnitts des Schachts (6), gewährleistet wird. Eventuelle praktisch-anwendungstechnische Varianten, die oben lediglich beispielhaft und nicht etwa abschließend beschrieben wurden, werden als dem Bereich des Patentschutzes der Erfindung - wie sie oben beschrieben und im Folgenden geltend gemacht wird - zugehörig betrachtet.

**Patentansprüche**

1.  Verfahren zur Beschickung eines Schachtofens mit Schüttgut unterschiedlicher Stückgröße, **dadurch gekennzeichnet, dass** das Schüttgut an unterschiedlichen Positionen bezüglich des horizontalen Querschnitts des Innenraums des Schachtofens zugeführt wird, um eine gleichmäßige Verteilung des Schüttguts bezüglich des Querschnitts des Schachtofeninnenraums zu erhalten.

**2.** Verfahren nach Anspruch 1 **dadurch gekennzeichnet, dass** die Zufuhr des Schüttguts an den unterschiedlichen Positionen zeitlich versetzt erfolgt.

**3.** Verfahren nach einem der Ansprüche 1 oder 2 **dadurch gekennzeichnet, dass** die Zufuhr des Schüttguts mittels eines Förderbandes (11) erfolgt.

**4.** Verfahren nach einem der vorangegangenen Ansprüche **dadurch gekennzeichnet, dass** das Förderband (11) von einer Ruheposition (A) über eine mittlere Betriebsposition (C) in eine finale Betriebsposition (B) bewegt wird,
wobei
in der Ruheposition (A) sich das Förderband (11) von oben gesehen vollständig außerhalb des horizontalen Querschnitts des Schachtofens befindet;
sich in der mittleren Betriebsposition (C) ein Teil des Förderbandes (11) von oben gesehen innerhalb des horizontalen Querschnitts des Schachtofeninnenraums befindet, aber das Förderband (11) die vertikale Zentralachse (H) des Schachtofens nicht schneidet;
und
sich in der finalen Betriebsposition (B) das Förderband von oben gesehen innerhalb des horizontalen Querschnitts des Schachtinnenraums befindet und die vertikale Zentralachse (H) des Schachtofens schneidet.

**5.** Verfahren nach Anspruch 4 **dadurch gekennzeichnet, dass** das Förderband (11) horizontal verschoben wird.

**6.** Verfahren nach einem der Ansprüche 4 oder 5 **dadurch gekennzeichnet, dass** die Zufuhr an die unterschiedlichen Positionen erfolgt, während das Förderband (11) zwischen der mittleren Betriebsposition (C) und der finalen Betriebsposition (B) verschoben wird.

**7.** Verfahren nach eindem der Ansprüche 4 bis 6 **dadurch gekennzeichnet, dass** die folgende Relation erfüllt ist:

$$\frac{N}{2} \le P$$

wobei

N der Abstand zwischen der Zentralachse (H) des Schachtofens und der Stelle ist, an der das Förderband (11) beim Verschieben von der Ruheposition (A) in die finale Betriebsposition (B) den horizontalen Querschnitt des Schachtofeninnenraums, von oben gesehen, erstmals kreuzt; und
P der Abstand zwischen der mittleren Betriebsposition (C) und der finalen Betriebsposition (B) ist.

**8.** Verfahren nach einem der Ansprüche 4 bis 7, **dadurch gekennzeichnet, dass** der Schachtofen im oberen Teil eine Zuführung (8) enthält, durch die das Schüttgut mittels des Förderbands (11) dem Schachtofen zugeführt wird.

**9.** Verfahren nach Anspruch 8, **dadurch gekennzeichnet, dass** beim Öffnen der Zuführung (8) das Förderband bereits in Betrieb ist.

**10.** Verfahren nach einem der vorangegangenen Ansprüche, **dadurch gekennzeichnet, dass** der Schachtofen einen rechteckigen horizontalen Querschnitt hat.

**11.** Vorrichtung zur Beschickung eines Schachtofens umfassend

- ein Förderband (11) zur Zuführung von Schüttgut in den Schachtofen;
- eine Vorrichtung zum Verschieben des Förderbandes (11),

**dadurch gekennzeichnet, dass** das Förderband (11) mittels der Vorrichtung zum Verschieben des Förderbandes (11) zwischen einer Ruheposition (A) über eine mittlere Betriebsposition (C) in eine finalen Betriebsposition (B) verschoben werden kann, wobei
in der Ruheposition (A) sich das Förderband (11) von oben gesehen vollständig außerhalb des horizontalen Querschnitts des Schachtofens befindet;
sich in der mittleren Betriebsposition (C) ein Teil des Förderbandes (11) von oben gesehen innerhalb des horizontalen Querschnitts des Schachtofeninnenraums befindet, aber das Förderband (11) die vertikale Zentralachse (H) des Schachtofens nicht schneidet;
und
sich in der finalen Betriebsposition (B) das Förderband von oben gesehen innerhalb des horizontalen Querschnitts des Schachtinnenraums befindet und die vertikale Zentralachse (H) des Schachtofens schneidet.

**12.** Vorrichtung nach Anspruche 11 **dadurch gekennzeichnet, dass** die Vorrichtung zum Verschieben des Förderbandes (11) das Förderband (11) mittels eines Stellmotors und einer Zahnstange verschiebt.

**13.** Vorrichtung nach einem der Ansprüche 11 oder 12 **dadurch gekennzeichnet, dass** die Vorrichtung zum Verschieben des Förderbandes (11) das Förderband (11) horizontal verschiebt.

**14.** Schachtofen enthaltend die Vorrichtung gemäß einem der Ansprüche 11 bis 13.

**15.** Verwendung eines Schachtofens nach Anspruch 14 für Kalzinierungsreaktionen.

FIG 1

FIG 2

Europäisches
Patentamt

European
Patent Office

Office européen
des brevets

**EUROPÄISCHER RECHERCHENBERICHT**

**Nummer der Anmeldung**

EP 09 01 1690

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | WO 98/38465 A1 (LECZEW JAN [BG]; SIEWIERSKA DANIELA PETROVA [BG]) 3. September 1998 (1998-09-03) | 1 | INV. C04B2/12 F27B1/20 F27D3/10 |
| Y | * Seite 1, Zeilen 17-35; Anspruch 1 * ----- | 2-15 | |
| X | US 3 149 734 A (ADRIAN ILMONI PEHR) 22. September 1964 (1964-09-22) | 1-3,10 | ADD. F27B1/00 |
| Y | * Spalte 4, Zeilen 3-15; Ansprüche 1-5; Abbildungen 1-3 * ----- | 2-15 | |
| X | US 3 912 091 A (THOMPSON BUSTER RAY) 14. Oktober 1975 (1975-10-14) * Spalte 1, Zeilen 8-13 * * Ansprüche 1,2; Abbildung 1 * ----- | 11-13 | |

| RECHERCHIERTE SACHGEBIETE (IPC) |
|---|
| C04B F27B F27D |

Der vorliegende Recherchenbericht wurde für alle Patentansprüche erstellt

| Recherchenort | Abschlußdatum der Recherche | Prüfer |
|---|---|---|
| Den Haag | 16. Februar 2010 | Rischard, Marc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 1690

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2010

| Im Recherchenbericht angeführtes Patentdokument | | Datum der Veröffentlichung | Mitglied(er) der Patentfamilie | | Datum der Veröffentlichung |
|---|---|---|---|---|---|
| WO 9838465 | A1 | 03-09-1998 | AU | 6200998 A | 18-09-1998 |
| | | | BG | 62406 B1 | 29-10-1999 |
| | | | BG | 101275 A | 31-08-1998 |
| US 3149734 | A | 22-09-1964 | KEINE | | |
| US 3912091 | A | 14-10-1975 | KEINE | | |

EPO FORM P0461

Für nähere Einzelheiten zu diesem Anhang : siehe Amtsblatt des Europäischen Patentamts, Nr.12/82